# EUROPÄISCHE PATENTANMELDUNG

(11) **EP 1 258 767 A1**
(43) Veröffentlichungstag der Anmeldung: **20.11.2002**
(21) Anmeldenummer: 02100423.9
(22) Anmeldetag: 29.04.2002
(51) Int. Cl.: G02B 21/00, G02B 21/24, G02B 7/00

(54) **Mikroskop und Verfahren zum Betreiben eines Mikroskops**

(30) Priorität: 04.05.2001 DE 10121732
(71) Anmelder: Leica Microsystems Heidelberg GmbH, 68165 Mannheim (DE)
(72) Erfinder: Engelhardt, Johann, 76669, Bad Schönborn (DE); Hoffmann, Jürgen, 65520, Bad-Camberg (DE)
(74) Vertreter: Reichert, Werner F., Dr.

(57) **Zusammenfassung**

Die vorliegende Erfindung betrifft ein Mikroskop und ein Verfahren zum Betreiben eines Mikroskops, insbesondere eines konfokalen oder eines doppelkonfokalen Rastermikroskops, mit einem zwischen einer Lichtquelle (1), einem Objekt (2) und einem Detektor (7) und/oder Nachweisoptik verlaufenden optischen Strahlengang (9), wobei zwischen dem Objekt (2) und dem optischen Strahlengang (9) beabsichtigte und unbeabsichtigte Relativbewegungen auftreten, wobei ungewollte Relativbewegungen zwischen Objekt (2) und optischem Strahlengang (9) des Mikroskops keine oder nur geringe Abbildungsfehler zur Folge haben sollen bzw. bei dem Verfahrensschritte vorgesehen sind, die Abbildungsfehler, die durch ungewollte Relativbewegungen zwischen Objekt (2) und optischem Strahlengang (9) hervorgerufen werden, vermeiden oder minimieren, und ist dadurch gekennzeichnet, dass eine Einrichtung (8) Relativbewegungen detektiert und dass eine Einrichtung (22) unbeabsichtigte Relativbewegungen kompensiert.

## Beschreibung

Die vorliegende Erfindung betrifft ein Mikroskop, das Mikroskopkomponenten beinhaltet, die zumindest aus einer Lichtquelle, einem Objekttisch und einem Detektor bestehen, wobei zwischen den Mikroskopkomponenten beabsichtigte und unbeabsichtigte Relativbewegungen auftreten

Die Erfindung betrifft weiterhin ein Verfahren zum Betreiben eines Mikroskops, das Mikroskopkomponenten beinhaltet, die zumindest aus einer Lichtquelle, einem Objekttisch und einem Detektor bestehen, wobei zwischen den Mikroskopkomponenten beabsichtigte und unbeabsichtigte Relativbewegungen auftreten

Mikroskope sind Geräte zum Untersuchen mikroskopischer Objekte, die vielseitigen Einsatz gefunden haben und aus den Labors nicht mehr wegzudenken sind. So dienen Mikroskope beispielsweise zur Untersuchung biologischer und medizinischer Objekte. Konfokale oder doppelkonfokale Rastermikroskope sind seit langem aus der Praxis und aus Forschungslaboratorien bekannt. Lediglich beispielhaft wird auf die EP 0491289 B1 hingewiesen, aus der ein doppelkonfokales Rastermikroskop bekannt ist.

Sowohl in der konventionellen als auch in der konfokalen oder doppelkonfokalen Rastermikroskopie kommt es durch ungewollte Relativbewegungen zwischen Objekt und optischem Strahlengang zu Abbildungsfehlern. Diese Relativbewegungen sind Verschiebungen einzelner Mikroskopkomponenten zueinander, die beispielsweise durch Vibrationen oder durch Temperaturänderungen hervorgerufen werden. Hierbei verursachen Vibrationen üblicherweise schnelle Relativbewegungen, sie werden beispielsweise durch Lüftungsventilatoren von Netzgeräten induziert. Temperaturänderungen bedingen Längenausdehnungen einzelner Komponenten, die üblicherweise langsame Relativbewegungen zwischen Objekt und optischem Strahlengang zur Folge haben. Als Beispiel hierfür sei eine in dem Stativ eines konfokalen Rastermikroskops eingebaute Laserlichtquelle genannt, die nach längerer Betriebsdauer das Mikroskopstativ aufwärmt, wodurch eine Längenausdehnung des Mikroskopstativs induziert wird, wodurch sich eine Relativbewegung zwischen dem Objekt und dem Objektiv ergibt, die Langzeitaufnahmen unmöglich machen können.

Unbeabsichtigte Relativbewegungen können sich auch durch die Interaktion eines Bedieners mit dem Mikroskop ergeben, wenn beispielsweise der Bediener zum Umschalten in einen anderen Mikroskopmodus einen Strahlteilerschieber betätigt.

Insbesondere bei der konfokalen oder doppelkonfokalen Rastermikroskopie sind mechanische Schwingungen bzw. Vibrationen einer Mikroskopkomponente entlang der optischen Achse eine besonders große Fehlerquelle. Wenn beispielsweise die Periodendauer einer solchen Schwingung in der gleichen Größenordung liegt wie die sich aus Pixelabtastrate und Zeilenabtastrate ergebenden charakteristischen Zeiten, kann eine Abrasterung einer Objektoberfläche nahezu unbrauchbar werden, denn eine Relativbewegung des Objekts relativ zur Fokusebene des Objektivs führt in diesem Fall zu gravierenden Schwankungen der Detektionslichtleistung, die sich in Streifenmustern im Bild äußern. Bei herkömmlichen Mikroskopanordungen und bei einer routienemäßigen Mikroskopbedienung unter Laborbedingungen sind im Allgemeinen unbeabsichtigte Relativbewegungen des Objekts sehr schwer zu vermeiden, da in konstruktiver Hinsicht Kompromisse hinsichtlich der mechanischen Stabilität und der flexiblen Einsatzfähigkeit der Mikroskope eingegangen werden müssen.

Eine niederfrequente Störung, beispielsweise durch Mikroskopbedienerinteraktion, ist schwer zu dämpfen, da selbst spezielle Halterungstechniken keine befriedigende Wirkung zeigen oder apparativ aufwendig und teuer sind. Beispielsweise kann mit Hilfe einer Luftlagerung des gesamten Mikroskops eine niederfrequente Störung gedämpft werden, jedoch dauert üblicherweise das Nachschwingen des Mikroskops zu lange an.

Beabsichtigte Relativbewegungen zwischen Objekt und optischem Strahlengang sind beispielsweise das Fokussieren eines Objekts oder die motorgesteuerte Objektpositionierung eines automatisierten Mikroskops.

Der vorliegenden Erfindung liegt daher die Aufgabe zugrunde, ein Mikroskop vorzuschlagen, bei dem Abbildungsfehler durch ungewollte Relativbewegungen zwischen Objekt und dem Mikroskopkomponenten bzw. zwischen den Mikroskopkomponenten vermieden oder zumindest reduziert sind.

Die Aufgabe wird durch ein Mikroskop gelöst, das dadurch gekennzeichnet ist, dass eine erste Einrichtung Relativbewegungen detektiert und dass eine zweite Einrichtung unbeabsichtigte Relativbewegungen kompensiert.

Eine weitere Aufgabe der Erfindung ist es ein Verfahren vorzuschlagen das Abbildungsfehler in der Mikroskopie, die durch ungewollte Relativbewegungen zwischen Objekt und dem Mikroskopkomponenten bzw. zwischen den Mikroskopkomponenten hervorgerufen werden, vermeidet bzw. vermindert.

Diese Aufgabe wird durch ein Verfahren gelöst, das durch folgende Schritte gekennzeichnet ist:
- Detektieren von Relativbewegungen mit einer ersten Einrichtung (8) und
- Kompensieren unbeabsichtigter Relativbewegungen mit einer zweiten Einrichtung (22).

Hierbei kann vorgesehen sein, dass die Einrichtung zur Detektion von Relativbewegungen auch zur Kompensation von unbeabsichtigten Relativbewegungen eingesetzt wird, dass es sich also um ein und dieselbe Einrichtung handelt. Ganz allgemein ist jedoch eine Einrichtung zur Detektion von Relativbewegungen und eine weitere Einrichtung zur Kompensation unbeabsichtigter Relativbewegungen vorgesehen.

Erfindungsgemäß ist zunächst erkannt worden, dass das Realisieren von Maßnahmen zum Verhindern von unbeabsichtigten Relativbewegungen zwischen Objekt und optischem Strahlengang grundsätzlich aufwendig und teuer sind. So würde beispielsweise eine stabilere Konstruktion des Mikroskoptischs gegebenenfalls unbeabsichtigte Relativbewegungen zwischen Objekt und optischem Strahlengang verhindern, der hierzu erforderliche Aufwand wäre jedoch sehr hoch und das so modifizierte Mikroskop würde unter Umständen eine geringere Flexibilität aufweisen.

In erfindungsgemäßer Weise wird demgemäß nicht ausschließlich versucht, die unbeabsichtigten Relativbewegungen zwischen Objekt und optischem Strahlengang zu verhindern, sondern es ist vorgesehen, die unbeabsichtigten Relativbewegungen zu kompensieren. Hierzu detektiert eine Einrichtung Relativbewegungen zwischen Objekt und optischem Strahlengang des Mikroskops. Falls es sich bei der detektierten Relativbewegung um eine unbeabsichtigte Relativbewegung handelt, wird diese durch eine geeignete Einrichtung kompensiert. Hierzu könnten aktive oder passive Komponenten vorgesehen sein, die, je nach dem welche Komponente des Mikroskops zur Kompensation vorgesehen ist, platzsparend, einfach und preisgünstig am Mikroskop implementiert werden können. In besonders vorteilhafter Weise ist durch diese Vorgehensweise eine Nachrüstung bereits im Einsatz befindlicher Mikroskopsysteme möglich. Dies wäre bei der Vorgehensweise, die unbeabsichtigten Relativbewegungen grundsätzlich verhindern zu wollen, nicht möglich wäre, da das "stabile" Mikroskopstativ in nur sehr aufwendiger Weise mit dem bereits bestehendem "instabilen" Mikroskopstativ ausgetauscht werden kann.

Da es nicht möglich ist, die Relativbewegung zwischen einem Objekt und dem optischem Strahlengang des Mikroskops direkt zu detektieren, ist vorgesehen, dass die Einrichtung Relativbewegungen
- zwischen einem Objekt und einem Objektiv und/oder
- zwischen einem Objekttisch und einem Objektiv und/oder
- zwischen einem Objektiv und einer Objektträgereinheit und/oder
- zwischen einem Objekttisch und einem Mikroskopstativ
detektiert werden. Unter dem optischen Strahlengang des Mikroskops ist in diesem Zusammenhang die optische Achse der Mikroskopoptik zu verstehen.

Bei einem konfokalen oder doppelkonfokalen Rastermikroskop könnte eine Einrichtung vorgesehen sein, die Relativbewegungen zwischen einem Objekt und dem Objektiv optisch detektiert. Hierzu könnte am Objekt beispielsweise ein künstliches Testobjekt, z.B. in Form eines fluoreszierenden Latex-Beads, angebracht sein, dessen Position lichtoptisch mit Licht einer Wellenlänge detektiert wird, die nur zu diesem Zweck eingesetzt wird.

Die oben erwähnte Objektträgereinheit könnte beispielsweise ein Objektträger mit einem Deckglas sein, wobei das Objekt zwischen Objektträger und Deckglas angeordnet ist. Weiterhin könnten zwei Deckgläser eine Objektträgereinheit bilden, wobei das Objekt zwischen den beiden Deckgläsern angeordnet ist. Eine so ausgebildete Objektträgereinheit wird bevorzugt bei der doppelkonfokalen Rastermikroskopie eingesetzt. Eine Objektträgereinheit könnte auch eine Petrischale sein, die auf einem Mikroskoptisch adaptierbar ist und die eine Untersuchung von lebenden biologischen Objekten ermöglicht.

Die Einrichtung zur Detektion von Relativbewegungen weist einen oder mehrere Sensoren auf, die mechanisch, induktiv, kapazitiv, lichtoptisch und/oder nach dem Wirbelstromsensorprinzip arbeiten. So könnten beispielsweise induktiv oder kapazitiv arbeitende Sensoren vorgesehen sein, die Relativbewegungen zwischen dem Objekttisch und dem Mikroskopstativ detektieren. Hierbei ist mit kapazitiv arbeitenden Sensoren im Allgemeinen eine Detektion mit einer sehr hohen Ortsauflösung möglich.

Alternativ oder zusätzlich könnte die Einrichtung zur Detektion von Relativbewegungen eine lichtoptische Interferenzanordnung umfassen. Diese dient insbesondere zu Abstandsmessung zweier Komponenten, beispielsweise Objekttisch und Mikroskopstativ. Auch hiermit ist eine Abstandsmessung mit einer sehr hohen Ortsauflösung möglich.

In einer konkreten Ausführungsform weist die Einrichtung mechanische Fühler auf, die beispielsweise in Form von dünnen, haarähnlichen Biegesensoren ausgeführt sind. Diese mechanischen Fühler könnten beispielsweise zwischen Objektiv und Objektträgereinheit oder zwischen Objekttisch und Objektiv angeordnet sein. Die Veränderungen eines mechanischen Fühlers könnte beispielsweise lichtoptisch nachgewiesen werden, wodurch ebenfalls eine Bestimmung von Relativbewegungen mit einer hohen Ortsauflösung möglich ist.

In einer konkreten Ausführungsform ist vorgesehen, dass die Einrichtung eine Hebelanordnung aufweist. Mit der Hebelanordnung kann eine Relativbewegung von beispielsweise der Objektträgereinheit einerseits zu einem Sensor geführt werden und andererseits durch eine mechanische Übersetzung in ihrer Auslenkung vergrößert werden. Der Einsatz einer Hebelanordung ist insbesondere dann vorgesehen, wenn die Einrichtung Relativbewegungen zwischen Objektträgereinheit und Objektiv oder Mikroskopstativ detektiert, da in der unmittelbaren Umgebung einer Objektträgereinheit, beispielsweise eines Deckglases, üblicherweise nicht genügend Platz ist, um entsprechende Sensoren zur Detektion von Relativbewegungen anzubringen. So ist in einer konkreten Ausführungform vorgesehen, dass der Hebel der Hebelanordung einerseits an der Objektträgereinheit, beispielsweise mit einem kleinen Saugnapf oder einer Klebebeschichtung, angreift bzw. fixierbar ist und andererseits der Hebel am Mikroskopstativ gelagert ist. Hierbei könnte der Hebel derart gelagert sein, das er Relativbewegungen detektiert, die vor allem entlang der optischen Achse des optischen Strahlengangs verlaufen oder Relativbewegungen quer dazu, d.h. Relativbewegungen die in einer Ebene verlaufen, die parallel zur Fokalebene des Objektivs orientiert ist.

In einer besonders bevorzugten Ausführungsform ist vorgesehen, dass unbeabsichtigte Relativbewegungen zwischen Objekt und optischem Strahlengang mit Hilfe einer Steuerung oder eines Regelkreises kompensiert werden. Insoweit erfüllt die Einrichtung die Aufgabe eines Meßglieds der Steuerung oder des Regelkreises. Grundsätzlich ist vorgesehen, dass die von einer Mikroskopsteuereinheit beabsichtigten Objektbewegungen bzw. Bewegungen des Objekttischs ebenfalls von der Einrichtung detektiert werden und - da beabsichtigt - nicht kompensiert werden. Hierzu ist die Steuerung oder der Regelkreis mit einer Mikroskopsteuereinheit beispielsweise eines konfokalen Rastermikroskops mittelbar oder unmittelbar verbunden.

Unbeabsichtigte Relativbewegungen hingegen werden mit Hilfe eines Stellglieds der Steuerung oder des Regelkreises kompensiert. Hierbei könnte das Stellglied den Objekttisch und/oder den Objektivrevolver und/oder das Objektiv in seiner Position verändern. Die Positionsveränderung könnte piezo-, galvanometer- oder motorangetrieben erfolgen. Insbesondere könnte das Objektiv durch eine Piezo-Fokussiereinrichtung, die zwischen Objektivrevolver und Objektiv anordenbar ist, in seiner Position entlang seiner optischen Achse verändert werden. Weiterhin könnte der Objektivrevolver motorangetrieben entlang des optischen Strahlengangs des Mikroskops verstellt werden. Hierzu ist in besonders bevorzugter Weise vorgesehen, eine motorangetriebene Hebelordnung einzusetzen, wie sie beispielsweise aus der DE 199 24 709 bekannt ist. Weiterhin könnte ein Stellglied vorgesehen sein, dass die Position des Objekttischs in Richtung des optischen Strahlengangs und/oder senkrecht hierzu verstellt. Zur Positionierung des Objekttischs entlang des optischen Strahlengangs des Mikroskops ist in bevorzugter Weise vorgesehen, eine Anordnung einzusetzen, wie sie beispielsweise aus der DE 196 50 392 bekannt ist.

In einer weiter bevorzugten Ausführungsform ist vorgesehen, dass zur Kompensation unbeabsichtigter Relativbewegungen eine Verschiebung und/oder eine Verkippung einer optischen Komponente im Strahlengang des Mikroskops erfolgt. Als optische Komponente zur Kompensation unbeabsichtigter Relativbewegungen könnte beispielsweise eine Linse oder ein Spiegel vorgesehen sein. Hierbei könnte die optische Komponente axial, also entlang des optischen Strahlengangs des Mikroskops, oder lateral, also quer hierzu, verschoben werden. Alternativ oder zusätzlich hierzu ist eine Verkippung der optischen Komponente vorgesehen, die vorzugsweise um zwei senkrecht zueinander stehende Kippachsen ausgeführt wird, was beispielsweise mit Hilfe einer kardanischen Anordnung erzielt werden kann. Diese Kompensationsart kann in besonders vorteilhafter Weise sehr schnell erfolgen, da die optische Komponente aufgrund ihrer geringen Masse schnell bewegt werden kann.

Falls das Mikroskop ein konfokales oder doppelkonfokales Rastermikroskop ist, ist zur Kompensation einer unbeabsichtigten Relativbewegung des Objekts in lateraler Richtung vorgesehen, ein Korrektursignal auf die Steuersignale der Scaneinrichtung des Rastermikroskops aufzumodulieren. Insoweit kann hierdurch - zumindest in einem gewissen Bereich, der von den Eigenschaften der Scaneinrichtung und der Abbildungsoptik abhängt - eine unbeabsichtigte Relativbewegung des Objekts in lateraler Richtung dadurch kompensiert werden, das die Scaneinrichtung mit entsprechenden "offset-Signalen" den Scanvorgang nicht mehr an der ursprünglichen Stelle ausführt, sondern an der Stelle, an der sich das Objekt nach der unbeabsichtigten Relativbewegung befindet. Auch diese Kompensation kann in vorteilhafter Weise sehr schnell erfolgen.

Die bislang beschriebenen Maßnahmen zur Kompensation unbeabsichtigter Relativbewegungen des Objekts können vorzugsweise über aktiv gesteuerte Mechanismen zur Schwingungsunterdrückung und/oder Schwingungskompensation unterstützt werden. So ist vorgesehen, dass das Mikroskopstativ und/oder der Objekttisch und/oder der Objektivrevolver und/oder das Objektiv mit einem aktiv gesteuerten Mechanismus zur Schwingungsunterdrückung und/oder Schwingungskompensation versehen ist. Als aktiv gesteuerte Mechanismen könnte beispielsweise ein aktiv gesteuertes Pendel und/oder aktiv gesteuerte Schlingertanks vorgesehen sein. Letztere sind aus dem Bereich des Schiffbaus bekannt, wo durch die aktiv gesteuerten Schlingertanks das Schlingern eines Schiffs bei Wellengang unterdrückt wird. Durch die aktiv gesteuerten Mechanismen zur Schwingungsunterdrückung bzw. Schwingungskompensation können insbesondere Schwingungen niedriger Frequenzen gedämpft bzw. unterdrückt werden.

Ein erfindungsgemäßes Mikroskop könnte in besonders vorteilhafter Weise auch zur Kompensation unbeabsichtigter Relativbewegungen eingesetzt werden, die auf eine Interaktion eines Bedieners mit dem Mikroskop zurückzuführen ist. So könnte beispielsweise eine Bedienerinteraktion ein Objektivwechsel - d.h. das Einschwenken eines anderen Objektivs durch Betätigung des Objektivrevolvers -, ein Filterwechsel und/oder eine Strahlumschaltung umfassen. Solche Bedienerinteraktionen haben üblicherweise eine - wenn auch geringe - unbeabsichtigte Relativbewegung zwischen Objekt und optischem Strahlengang zur Folge, die bei dem erfindungsgemäßen Mikroskop kompensiert werden können.

Das erfindungsgemäße Verfahren zum Betreiben eines Mikroskops wird vorzugsweise mit einem Mikroskop, wie es oben beschrieben ist, ausgeführt.

In der Zeichnung zeigen:
- Fig. 1: eine schematische Darstellung eines ersten Ausführungsbeispiels eines erfindungsgemäßen Mikroskops und
- Fig. 2: eine schematische Darstellung eines weiteren Ausführungsbeispiels eines erfindungsgemäßen Mikroskops.

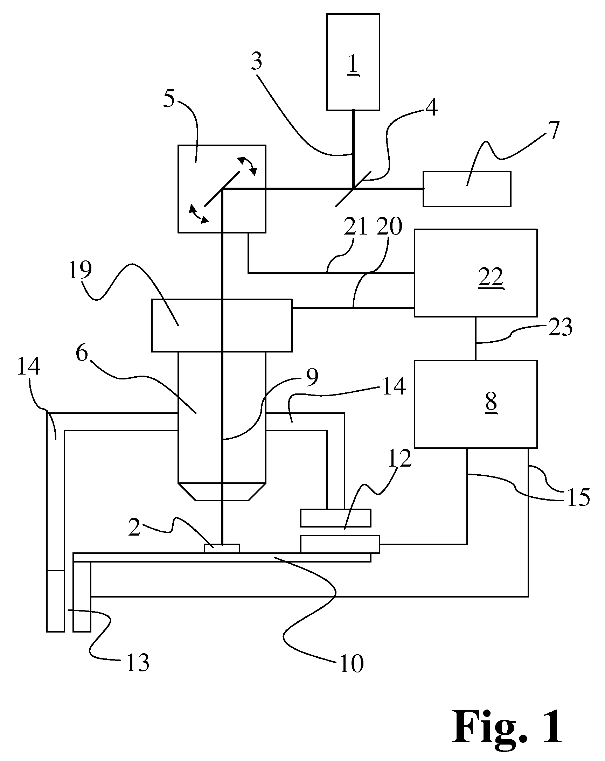

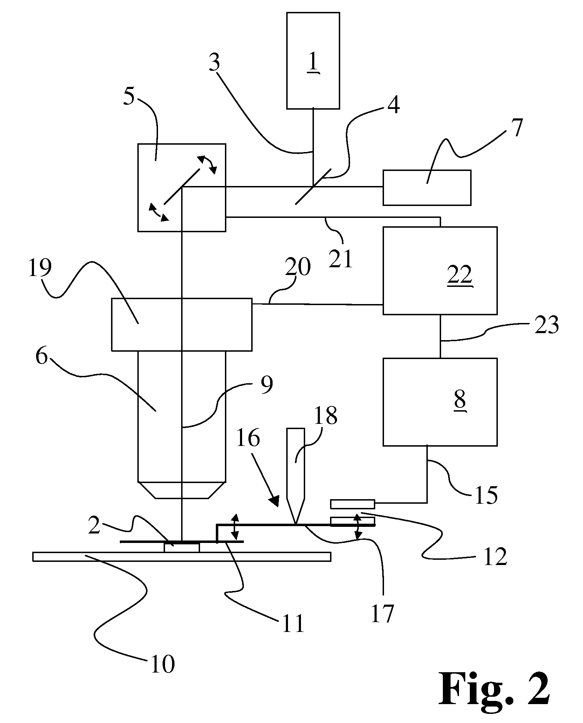

Die Fig. 1 und 2 zeigen jeweils ein konfokales Rastermikroskop, das eine Lichtquelle 1 zu Beleuchtung eines Objekts 2 aufweist. Das Licht 3 der Lichtquelle 1 wird vom Hauptstrahlteiler 4 zur Scaneinrichtung 5 reflektiert. Die Scaneinrichtung 5 weist einen Scanspiegel auf, der um zwei senkrecht zueinander geordnete Achsen drehbar gelagert ist. Dieser Scanspiegel reflektiert das Licht 3 der Lichtquelle 1. Durch Drehung des Scanspiegels wird das Licht 3 der Lichtquelle 1 entsprechend abgelenkt, so dass nach Durchlaufen des Objektivs 6 das Objekt 2 punktförmig abgerastert werden kann. Das vom Objekt 2 reflektierte bzw. induzierte Fluoreszenslicht durchläuft das Objektiv 6 in umgekehrter Richtung, wird von der Scaneinrichtung 5 zum Haubtstrahlteiler 4 reflektiert und kann schließlich vom Detektor 7 detektiert werden.

Erfindungsgemäß weist das in Fig. 1 gezeigte konfokale Rastermikroskop eine Einrichtung 8 auf, die Relativbewegungen zwischen dem Objekt 2 und dem optischem Strahlengang 9 des Mikroskops delektiert. Eine Einrichtung (22) kompensiert unbeabsichtigte Relativbewegungen zwischen Objekt 2 und optischem Strahlengang 9.

Die Einrichtung 8 aus Fig. 1 detektiert hierbei Relativbewegungen zwischen dem Objektiv 6 und dem Objekttisch 10. Bei dem in Fig. 2 gezeigten konfokalen Rastermikroskop detektiert die Einrichtung 8 Relativbewegungen zwischen dem nicht eingezeichneten Mikroskopstativ und dem Deckglas 11, das ein Teil der Objektträgereinheit ist.

Die Einrichtung 8 weist Sensoren 12, 13 auf, die kapazitiv arbeiten und zur Positionsbestimmung der jeweiligen Komponenten dienen. Hierbei dient Sensor 12 aus Fig. 1 zur axialen Positionsbestimmung des Objekttischs 10, Sensor 13 zur lateralen Positionsbestimmung. Jeweils ein Teil der Sensoren 12, 13 ist über die Halterung 14 mit dem Objektiv 6 verbunden, so dass mit den Sensoren 12, 13 letztendlich Relativbewegungen zwischen Objektiv 6 und Objekttisch 10 detektierbar sind. Die Sensoren 12, 13 sind über die Leitungen 15 mit der Einrichtung 8 unmittelbar verbunden.

In Fig. 2 ist eine Hebelanordnung 16 gezeigt, die einen mechanischen Hebel 17 und eine Lagerung 18 des mechanischen Hebels 17 aufweist. Die Lagerung 18 des Hebels 17 ist an dem in Fig. 2 nicht gezeigten Mikroskopstativ befestigt. Der mechanische Hebel 17 ist an seinem einen Ende unmittelbar am Deckglas 11 angebracht. Am anderen Ende des mechanischen Hebels 17 ist ein Teil des kapazitiv arbeitenden Sensors 12 befestigt. Mit der in Fig. 2 gezeigten Hebelanordnung 16 können somit Relativbewegungen zwischen Deckglas 11 und dem Mikroskopstativ detektiert werden.

Unbeabsichtigte Relativbewegungen zwischen Objekt und optischem Strahlengang werden mit Hilfe eines Regelkreises kompensiert, wobei die Einrichtung 22 als Gebereinheit des Regelkreises arbeitet. Die Einrichtung 8 ist mit der Einrichtung 22 über die Leitung 23 unmittelbar verbunden, letztendlich werden die von der Einrichtung 8 detektierten Daten über Relativbewegungen über die Leitung 23 zur Einrichtung 22 übertragen, die diese Signale entgegennimmt und weiterverarbeitet. Als Stellglied des Regelkreises ist das in den Fig. 1 und 2 gezeigte Piezoelement 19 vorgesehen, dass das Objektiv 6 in axialer Richtung, d.h. entlang des optischen Strahlengangs 9, positioniert. Hierzu ist das Piezoelement 19 über die Leitung 20 mit der Einrichtung 22 verbunden. Eine unbeabsichtigte Relativbewegung des Objekts 2 in lateraler Richtung wird durch das Aufmodulieren eines Korrektursignals auf die Steuersignale der Scaneinrichtung 5 erzielt. Hierzu ist die Scaneinrichtung 5 über die Leitung 21 mit der Einrichtung 22 verbunden.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Lichtquelle
- 2: Objekt
- 3: Licht von (1)
- 4: Hauptstrahlteiler
- 5: Scaneinrichtung
- 6: Objektiv
- 7: Detektor
- 8: Einrichtung
- 9: optischer Strahlengang
- 10: Objekttisch
- 11: Deckglas
- 12: Sensor
- 13: Sensor
- 14: Halterung
- 15: Leitung
- 16: Hebelanordnung
- 17: mechanischer Hebel
- 18: Lagerung
- 19: Piezoelement zur axialen Verstellung von (6)
- 20: Leitung
- 21: Leitung
- 22: Einrichtung
- 23: Leitung

## Patentansprüche

1. Mikroskop, das Mikroskopkomponenten beinhaltet, die zumindest aus einer Lichtquelle (1), einem Objekttisch (10) und einem Detektor (7) bestehen, wobei zwischen den Mikroskopkomponenten beabsichtigte und unbeabsichtigte Relativbewegungen auftreten, **dadurch gekennzeichnet, dass** eine erste Einrichtung (8) Relativbewegungen detektiert und dass eine zweite Einrichtung (22) unbeabsichtigte Relativbewegungen kompensiert.

2. Mikroskop nach Anspruch 1, **dadurch gekennzeichnet, dass** die erste Einrichtung (8) Relativbewegungen
- zwischen dem Objekt (2) und einem Objektiv (6) und/oder
- zwischen einem Objekttisch (10) und dem Objektiv (6) und/oder
- zwischen Objektiv (6) und einer Objektträgereinheit und/oder
- zwischen einem Objekttisch (10) und dem Mikroskopstativ detektiert.

3. Mikroskop nach Anspruch 1 oder 2, **dadurch gekennzeichnet, dass** die Einrichtung (8) Sensoren (12, 13) aufweist, die mechanisch, induktiv, kapazitiv, lichtoptisch und/oder nach dem Wirbelstromsensorprinzip arbeiten.

4. Mikroskop nach Anspruch 3, **dadurch gekennzeichnet, dass** die Einrichtung (8) eine lichtoptische Interferenzanordnung umfasst, die insbesondere zur Abstandsmessung dient.

5. Mikroskop nach Anspruch 3 oder 4, **dadurch gekennzeichnet, dass** die Einrichtung (8) mechanische Fühler aufweist.

6. Mikroskop nach einem der Ansprüche 1 bis 5, **dadurch gekennzeichnet, dass** die zweite Einrichtung eine Steuerung oder einen Regelkreis umfasst.

7. Mikroskop nach Anspruch 6, **dadurch gekennzeichnet, dass** die erste Einrichtung (8) zur Detektion von Relativbewegungen als Meßglied der Steuerung oder des Regelkreises wirkt.

8. Mikroskop nach Anspruch 6 oder 7, **dadurch gekennzeichnet, dass** als Stellglied der Steuerung oder des Regelkreises zumindest eine Mikroskopkomponente piezo- oder galvanometer- oder motorangetrieben ist.

9. Mikroskop nach einem der Ansprüche 1 bis 8, **dadurch gekennzeichnet, dass** zur Kompensation der unbeabsichtigten Relativbewegung eine Verschiebung und/oder Verkippung einer optischen Komponente im Strahlengang des Mikroskops vorgesehen ist.

10. Mikroskop nach einem der Ansprüche 1 bis 9, **dadurch gekennzeichnet, dass** das Mikroskop ein konfokales Rastermikroskop oder ein doppelkonfokales Rastermikroskop ist.

11. Verfahren zum Betreiben eines Mikroskops, das Mikroskopkomponenten beinhaltet, die zumindest aus einer Lichtquelle (1), einem Objekttisch (10) und einem Detektor (7) bestehen, wobei zwischen den Mikroskopkomponenten beabsichtigte und unbeabsichtigte Relativbewegungen auftreten, **gekennzeichnet durch** folgende Schritte:
- Detektieren von Relativbewegungen mit einer ersten Einrichtung (8) und
- Kompensieren unbeabsichtigter Relativbewegungen mit einer zweiten Einrichtung (22).

12. Verfahren nach Anspruch 11, **dadurch gekennzeichnet, dass** die erste Einrichtung (8) Relativbewegungen zwischen Mikroskopkomponenten oder zwischen Mikroskopkomponenten und dem Objekt delektiert.

13. Verfahren nach Anspruch 11, **dadurch gekennzeichnet, dass** die zweite Einrichtung (22) eine Steuerung oder einen Regelkreis umfasst, wobei die erste Einrichtung (8) als Messglied der Steuerung oder des Regelkreises wirkt und wobei als Stellglied der Steuerung oder des Regelkreises zumindest eine Mikroskopkomponente piezo- oder galvanometer- oder motorangetrieben ist.
